# EUROPEAN PATENT SPECIFICATION

(11) **EP 1 606 708 B1**
(45) Date of publication and mention of the grant of the patent: **09.05.2007**
(21) Application number: 03708730.1
(22) Date of filing: 03.03.2003
(51) Int. Cl.: G06F 9/455

(54) **METHOD FOR PROVIDING A SOFTWARE MODULE TO AN AUTOMOTIVE VEHICLE CONTROL UNIT, AND COMPUTER PROGRAM FOR EXECUTING THE METHOD**
VERFAHREN ZUR BEREITSTELLUNG EINES SOFTWAREMODULS FÜR EINE KRAFTFAHRZEUG-STEUEREINHEIT UND COMPUTERPROGRAMM ZUR AUSFÜHRUNG DES VERFAHRENS
PROCEDE PERMETTANT DE FOURNIR UN MODULE LOGICIEL A UNE UNITE DE COMMANDE DE VEHICULE AUTOMOBILE, ET PROGRAMME INFORMATIQUE PERMETTANT DE METTRE CE PROCEDE EN OEUVRE

(43) Date of publication of application: 21.12.2005
(73) Proprietor: Snap-on Technologies Inc., Lincolnshire, IL 60069-3608 (US)
(72) Inventor: STOFFELS, Nicolaas, Maria, Jozef, NL-2033 DN Haarlem (NL); HOEVENAAR, Robert, Johannes, NL-1661 BT De Weere (NL); ANTHONI, Carel, Christiaan, NL-2421 AR Nieuwkoop (NL)
(74) Representative: de Lang, Robbert-Jan
(86) International application number: PCT/NL2003/000158
(87) International publication number: WO 2004/079565

(56) References cited:
- WO-A-01/88817
- DE-A1- 19 852 814
- US-A1- 2002 026 474
- CAMPOS F T ET AL: "A reference architecture for remote diagnostics and prognostics applications" 2002 IEEE AUTOTESTCON PROCEEDINGS. SYSTEMS READINESS TECHNOLOGY CONFERENCE. AUTOTESTCON 2002. HUNTSVILLE, AL, OCT. 15 - 17, 2002, IEEE AUTOTESTCON PROCEEDINGS: IEEE SYSTEMS READINESS TECHNOLOGY CONFERENCE, NEW YORK, NY : IEEE, US, vol. CONF. 38, 10 October 2002 (2002-10-10), pages 842-853, XP010615817 ISBN: 0-7803-7441-X

## Description

The invention relates to a method for providing a software module to an automotive vehicle control unit. Further, the invention relates to a method for enabling a software module in an automotive vehicle control unit. Still further, the invention relates to a method for providing access to a software module for use in an automotive vehicle control unit. Also, the invention relates to computer programs comprising program instructions for executing these methods.

Currently, the use of computer systems in automotive vehicles is rapidly increasing, the computer systems being used for controlling an increasing amount of software modules in automotive vehicles, such as engine- and ignition control, airbag systems, anti-lock brake systems, electronic stability systems, instrument and/or display panels, anti theft security systems, central locking, electric windows, etc. With the ever increasing amount of software modules which are controlled by such on-board computers, the rapid development of electronic components for such on-board computers and the current world-wide car market in which a large number of different manufacturers is introducing on the market an ever increasing amount of new car models, the amount of different on-board vehicle computers which are installed in current vehicles is rapidly increasing. Commonly each microcomputer in the vehicle is equipped with its own software which is stored in a memory, such as a memory chip, which is accessible to the microcomputer.

Currently, the need emerges for providing an efficient mechanism for allowing service outlets, garages, and dealers to upgrade or reprogram software to be used by such computer system in the automotive vehicle. It is know to replace a memory means, such as semiconductor chip, e.g. an EPROM, in which the software is loaded, by an other one which comprises updated software, however this requires that the software is on stock at the dealer or service outlet, or alternatively will lead to a long lead time for obtaining the software. As service stations, such as car dealers, for servicing automotive vehicles, more and more tend to provide maintenance and repair services for several makes of automotive vehicles, the amount of different software modules required by a service station is rapidly increasing. Thus, memory chips which contain outdated software modules are frequently thrown away, which forms a waist of materials and electronic components, or alternatively need to be recycled by sending them back to the manufacturer which involves a substantial logistic and administrative organisation with associated costs. Further, delivery times for obtaining a new memory chip by a service outlet are long, as, at the moment when a new memory chip is required, first an order has to be placed at a distributor or a manufacturer of the automotive vehicle, after which the memory chip which has been ordered will be delivered by post, express service, etc. In general, the consequence of the above drawbacks is that service outlets for servicing automotive vehicles either spend unnecessary costs for ordering every new memory chip with software module which becomes available, and thus have available a large amount of memory chips which are hardly used, or frequently face the problem that an appropriate memory chip for a specific vehicle appears to be not on stock at the moment when such chip would be needed.

WO 01/88817 A discloses a method of writing data into a memory contained in a plug-in module. In this method, a plug-in module is accepted in a connector configured to interface with the plug-in module. First data is read from a data storage device, and an access control code that permits generation of second data based on the first data is obtained. Second data is then generated based on the first data and the obtained access control code. The memory contained in the plug-in module is written to based on the generated second data, and access to the second data is subsequently prevented by decrypting and writing data in blocks.

The invention intends to at least partly take away the problems of the prior art and to provide an easy, user-friendly, quick and safe method for providing a software module to an automotive vehicle control unit.

To achieve these and other goals, the method for providing a software module to an automotive vehicle control unit comprises the steps, by a programming device, of a) establishing a connection between a programmable memory of the vehicle control unit and the programming device, b) generating a request message, the request message comprising an software module identifier for identifying the software module, c) sending the request message from the programming device via a communication means to a server, d) receiving from the server an access message, enabling the programming device to access the software module and e) loading the software module, by the programming device, into the programmable memory of the vehicle control unit. Thus, the programmable memory can be loaded by the programming device with the software module. The steps according to the method can be performed locally, thus e.g. at the garage or service station, and make the software module available within a very short period of time. The programming device can e.g. comprise a computer system or a mobile telephone. Also the programming device can comprise a communication device, preferably a serial communication device for an on-board diagnosis and/or for Engine Control Unit (ECU) programming and/or reprogramming. Thus, a diagnostic instrument for e.g. serially reading out diagnostic and status information of the control unit, and programming or reprogramming operational parameters in the ECU, is comprised in the programming device. The programming device can comprise a Vehicle Communication Interface (VCI) for establishing communication with the vehicle control unit. Further, the programming device can be connected with at least the programmable memory of the vehicle control unit via a cable, connector or other wired or wireless communication means. Alternatively, it is possible that the programming device is comprised in the automotive vehicle control unit. The server can e.g. be placed at the manufacturers premises or the distributor of the automotive vehicle control unit respectively of the software modules, however can also be placed at any other convenient location. The server is connected to the programming device by a communication means, such as a telephone line, the internet, or any other suitable wired or wireless communication means which might be known as such. Security is increased as access to the software module is only enabled when a corresponding access message is sent by the server to the programming device. Thus, it is possible from the server to control and monitor the use of a particular software module. Also, in case that a user is not authorised to use a particular software module, sending the access message by the server can be disabled or an invalid access message can be transferred to the programming device. A user can for example select the software module which needs to be provided to the automotive vehicle control unit from a table, or overview on a display or by any other selection means which might be known per se, such as search software for searching a specific software module. With the method, a required software module can be quickly and easily provided to the automotive vehicle control unit by generating a request message identifying the software module, sending the request message to a server, the server in response to the request message generating an access message and sending the access message to the programming device, the programming device being now able to get access to a corresponding software module, upon which the software module is loaded into the programmable memory by the programming device. The request message can be sent to the server via a communication means, such as the internet, or by telephone or facsimile. For this purpose, the server can incorporate a fax server, voice response server or any other interactive communication means, however it is also possible that the information contained in the request message is entered into the server manually. The access message can be transferred from the server to the programming device via the internet, a telephone network or any other communication means. The access message can e.g. also be transferred by telephone and entered into the programming device or into the automotive vehicle control unit by any suitable input means, such as a keyboard of a computer which might be comprised in the programming device, a keyboard comprised in the automotive vehicle control unit, a barcode read by a barcode reader, etc. The automotive vehicle control unit can comprise an on-board control unit comprised in the vehicle, such as an engine- and ignition control unit (ECU), an anti-lock brake control unit, an airbag control unit, or any other control-, measurement-, or service unit which comprises a controlling device, such as a micro controller or any other computing unit. The automotive vehicle can comprise a car, a van, a truck, an MPV, an off the road vehicle etc.. Further, it is possible that the method according to the inventor is applied with a control unit for a stationary engine.

Advantageously, the method comprises the further step of sending a confirmation message from the programming device to the server, after loading the software module in the programmable memory. The confirmation message, which is advantageously sent by the automotive vehicle control unit, provides for a confirmation to the server that the particular software module has been programmed into the vehicle control unit. The confirmation received by the server can be stored in a database enabling tracebility as to which software module has been downloaded when and by whom into which vehicle or vehicle control unit. The tracebility will assist in avoiding liability issues for the vehicle manufacturer.

Advantageously, step d) comprises the steps of d1) receiving from the server the access message comprising an access key, d2) deriving the access key from the access message, and d3) accessing the software module by the programming device using the access key. The access key can comprise any suitable access means, such as a password, a security code, access code, or any other suitable access means. In this manner, the software module, or a library of different software modules, can be available to the user, e.g. stored on a CDROM, downloadable from the internet, etc, while access to the software is only provided when an appropriate access key has been provided.

Advantageously, the access key comprises a decryption key, step d3) advantageously comprising the step of decrypting the software module with the decryption key. Thus, access to the software can be controlled in a very effective manner, as only when an appropriate decryption key is available, access to the software module is provided. Advantageously, the method comprises the further step of g) charging, by the server, an amount to a user account for payment for the software module. Thus, upon receipt of a request message requesting access to a specific software module, an amount can be charged to a user account, the user thus paying for the software module requested.

Advantageously, step g) comprises the further step of g.1) checking, in a user account database, prior payments for a same user and g.2) determining a value of the amount based on the prior payments. Thus, pricing schemes can be set up by checking prior amounts charged to the same user and determining a value based on the previously charged amounts. It is for example possible to avoid multiple payments for a same software module, by setting the amount to zero in case that the same software module has already been requested and paid. Also, quantum discounts can be provided for users who request for and pay a certain, predetermined amount of software modules within a certain time frame.

Advantageously, the request message further comprises a destination identifier for identifying a destination for the software module. The destination identifier can advantageously be chosen from a group comprising a user identification, a vehicle identification, a programming device identification, a vehicle control unitidentification and/or a vehicle control unit memory identificaton. Thus, it is possible to provide a more detailed charging mechanism, as charging, and determining a height of the amount charged can further be based on a history of previous request messages and previous payments which are related to the same destination as the destination for the current request. Further, security and retraceability can be increased, as the destination for which the software module is requested (such as the user, the vehicle control unit, the programming device or a part thereof etc) is available at the server and can be stored in the server or in a memory which is accessible to the server. In particular in combination with the confirmation message described above, traceability will be excellent as the destination for the software module is known to the server, as well as confirmation of the loading of the software is provided.

Advantageously, the access message received in step d) further comprises a code number determined by the server and step d) comprises the further steps of d5) deriving the code number from the access message d6) storing the code number in the software module, the software module further comprising a code number calculation module for calculating the code number, for enabling the software module to verify if the code number calculated by the code number calculation module equals the code number stored in the software module. Thus, a further protection against unauthorised use of the software is provided. The software module comprises a code number as well as a code number calculation module. At a suitable moment, e.g. when starting the software module by the vehicle control unit, the software module first calculates the code number using the code number calculation module and then compares the calculated code number with the code number stored in the software module. If the code number stored in the software module is identical to the code number calculated by the code number calculation module, then the software is enabled, but in case that the code number calculation module provides a code number which does not correspond to the code number stored in the software, the software module is not enabled. The code number calculation module is advantageously adapted for calculating the code number using at least one input parameter comprising the destination identifier. Consequently, when use of the software module at a different destination is attempted, the calculation performed by the code number calculation module will result in calculation of a different code number, as the code number calculation module performs the calculation of the code number using the destination identifier as an input parameter. As a different destination identifier will result in a different code number, the code number stored in the software will not correspond to the code number calculated by the calculation module, which results in limited or no availability of the software module. Thus, unauthorised copying of the software module and unauthorised use of the software module at various destinations, such as various vehicle control units, vehicle communication interfaces etc. can be prevented. As the code number calculation module is comprised in the software module, it is possible to use different code number calculation modules for a variety of software modules, because the appropriate code number calculation module for the specific software module is comprised in each particular software module. In case that a third party for example has successfully retrieved the calculation algorithm used by the code number calculation module which is applied in a specific software module, this third party could eliminate the protection of the code number calculation module by calculating appropriate code numbers for a variety of destination identifiers and by storing each code number in a corresponding software module to be loaded without authorisation into a corresponding vehicle control unit etc. As however each software module can comprise a different code number calculation module making use of a different code number calculation algorithm, a different algorithm, and thus a different code number calculation module can be comprised in each different software module, which significantly impedes unauthorised use of various software modules, as for each particular software module providing a specific software module, the algorithm applied for calculating the code number in the code number calculation module used in that specific software module has to be retrieved. The code number calculation module can perform any kind of operation for calculating the code number, including logical, mathematical, and/or any suitable type of operation. Also, the code number calculation module can make use of one or more input parameters, comprising advantageously the destination identifier identifying the destination for the particular software module, however any other suitable type of input parameter can be used.

Advantageously, the method comprises the further steps of, by the server, before step d) providing a duplicate of the code number calculation tool to the server, calculating the code number in the server, and integrating the code number in the access message. Thus, the code number is calculated by a duplicate of the code number calculation tool (which comprises the same algorithm for calculating the code number as the code number calculation tool comprised in the software module), resulting in a possibility to individually calculate a code number upon receipt of a request message requesting a software module for a particular destination.

Advantageously, the software module comprises program instructions for, before enabling the software module in the automotive vehicle control unit, performing the steps of calculating the code number by the code number calculation module, comparing the code number calculated with the code number stored in the software module and enabling the software module only when the calculated code number equals the code number stored in the software module.

The software module can be read from a memory means, which advantageously is chosen from a group comprising an optically readable disk, a magnetically readable disk, a magnetically readable tape and a semiconductor memory. The software modules can thus be available for the user on a memory means, such as a CDROM, advantageously in encrypted form, and upon receipt of an appropriate access message, access to a particular software module is provided. Alternatively, it is possible that the software module can be downloaded from the internet or any other computer network.

The invention further comprises a method for enabling a software module in an automotive vehicle control unit, the software module having been provided to the instrument according to the method according to the invention, the method comprising the steps of calculating, in the automotive vehicle control unit, the code number by the code number calculation module, comparing the calculated code number with the code number stored in the software module, and enabling the software module only when the calculated code number equals the code number stored in the software module.

Further, the invention comprises a method for providing access to a software module for use in an automotive vehicle control unit having a programmable memory, the method comprising the steps of, in a server receiving, from a programming device, a request message requesting access to the software module, the request message comprising a software identification for identifying the software module and sending an access message comprising an access key enabling the automotive instrument to access the software module, from the server to the programming device.

The computer programs according to the invention comprise program instructions for executing the respective methods according to the invention.

Further advantages and features of the invention will become clear from a description of the appended drawing, showing nonlimiting embodiments of the invention, in which:
Fig 1 shows a system for providing a software module to an automotive vehicle control unit according to the invention;
Fig. 2 shows a flow diagram showing a method for providing the software module to the automotive vehicle control unit, according to the invention; and
Fig. 3 shows a flow diagram describing a method for enabling the software module which has been provided to the vehicle control unit as described with reference to Fig. 2, in the vehicle control unit.

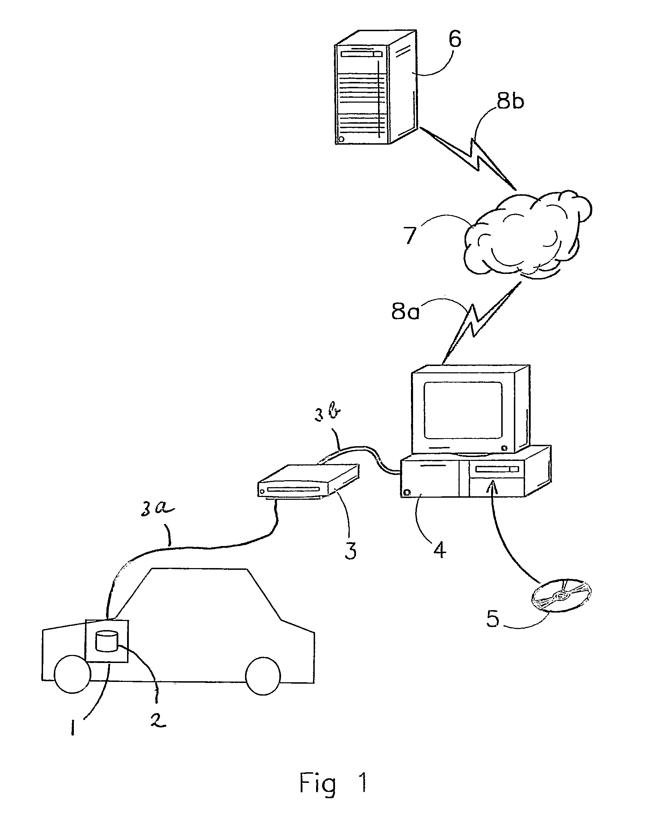

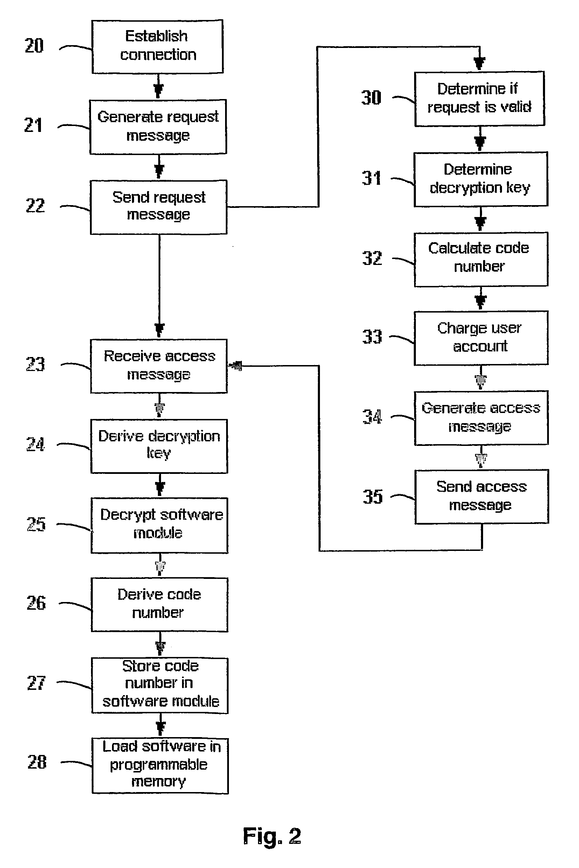

Fig. 1 very schematically shows a vehicle with an automotive vehicle control unit 1 which is equipped with a programmable memory 2. Fig. 1 further shows a programming device in this example consisting of a programming station 3 and a personal computer 4 which is connected via a suitable data connection 3b to the programming station 3 . The automotive vehicle control unit 1, or at least the programmable memory 2 can be connected to the programming station 3 via a wired, radio frequency or infrared connection 3a, such that programming the programmable memory by the programming station 3 is made possible. The programming station 3 can comprise a protocol converter, voltage level converter, etc.. Further, the programming station 3 can comprise an automotive diagnostics instrument, such as a serial communication device for an on-board diagnosis and/or Engine Control Unit (ECU) programming and/or reprogramming. The programming station 3 can also comprise a Vehicle Communication Interface (VCI). The personal computer 4 is connected to a server, such as in this example an internet server 6 which can be on a location remote from the personal computer 4. The personal computer 4 and the internet server 6 are connected to each other via a network 7, such as a telephone network, a private computer network or a public computer network such as the internet, and the personal computer 4 as well as the internet server 6 is connected to the network 7 via a suitable communication link 8a, 8b, respectively, such as for example a modem, a data communication line, a local area network, etc. The automotive vehicle control unit 1, the programmable memory 2, programming station 3 and personal computer 4 will in practice be positioned at a service outlet, garage, car dealer, or alternatively at a service outlet or dealer for the automotive vehicle control unit, however any other location is possible too. The server 6 will typically be under control of a manufacturer or authorised dealer of the automotive vehicle control unit 1, which enables such person, firm or party controlling the server 6 to allow or deny access for a user of the programming station 3 and personal computer 4 to a software module for the automotive vehicle control unit 1, as will be explained in more detail below. In this example, the software module (also called software or software program) is available to the user of the programming station 3 and personal computer 4 on a computer readable medium, such as a CD-ROM 5. The CD-ROM 5 comprises one or more software modules for the automotive vehicle control unit 1, which are incorporated in suitable software programs. The software is stored on the CD-ROM 5 in an encrypted manner, and will need a decryption before being able to be functionally applied. The operation of the system according to Fig. 1 will be described with reference to Fig. 2. The software module can comprise program instructions to be executed by the automotive vehicle control unit 1, however it is also possible that the software module comprises parameters, parameter arrays, -fields or any other data to be used by the automotive vehicle control unit 1.

Fig. 2 shows a flow diagram comprising steps 20 to 28, which are performed in the programming device, i.e. the personal computer 4, the programming station 3, or both. Further, Fig. 2 shows steps 30-35, which are performed by the server 6 shown in Fig 1. In step 20, a connection is established between the programmable memory 2 of the vehicle control unit 1, and the programming device, in this example the programming station 3. This can take place by electrically connecting the memory 2 to the programming station 3. Upon selection of the software module by the user of the personal computer 4 and inputting the selection by the user into the personal computer in a manner known per se, a request message is generated in step 21. The request message comprises a software module identifier for identifying the software module requested, such as a software number, and advantageously comprises a destination identifier such as a memory number, control unit number, user number, customer number, vehicle identification number, or any other suitable identifier. Then, in step 22 the request message is sent from the personal computer 4 via the network 7 to the server 6. In step 30, in the server, is determined if the request is valid. Such determination of validity can e.g. be performed based on the destination identifier, i.e. by checking in a database in or operationally connected to the server 6 if the request comprises a destination identifier which is comprised in a list of valid destination identifiers comprised in the database. Then, a decryption key is determined in step 31. The decryption key can be dependent on the software module, i.e. on the particular software requested which is on the CD-ROM 5, however it is also possible that the decryption key is user dependent, destination dependent, etc. Then, in step 32 in the server a code number is calculated making use of a code number calculation module which resides in the server or is accessible by the server. The software module of the code number and the code number calculation module will be explained in more detail below. In step 33 a user account is charged for the requested software module. The charging can be performed on a fixed fee basis, however it is also possible that an amount of the charging is based on e.g. prior payments, a discount schedule, or any other suitable other parameter. In step 34, an access message is generated, the access message comprising the decryption key which has been determined in step 31 and the code number calculated in step 32. Then, in step 35 the access message is sent to the programming device, in this example the personal computer 4, via the network 7 and received therein in step 23. Following receipt of the access message, in step 24 the decryption key is derived from the access message, with which the requested software which is stored on the CD-ROM is decrypted in the personal computer 4, as indicated with step 25. Also, in step 26 the code number is derived from the access message and the code number is stored in the software which has been decrypted in step 25. Then, in step 28 the software module is loaded by the programming station 3 into the programmable memory 2. Further, a confirmation message (not shown in fig. 2) can be sent to the server for confirming completion of the loading of the software module in the memory 2 of the vehicle. Thus, a protection against unauthorised use of the software module comprised in the software is accomplished, as only a user or destination which is considered valid by the server 6 will receive an appropriate access message with which access to the software comprising the software module is provided.

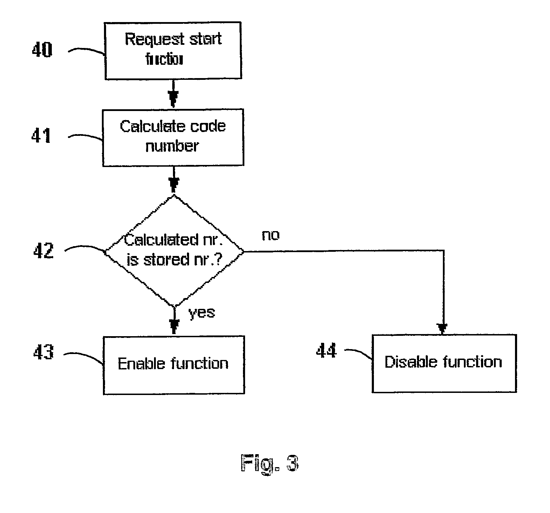

When, in the automotive vehicle control unit, a start of the software module is requested, as indicated with step 40 in Fig. 3, then the software module first calculates the code number in step 41. The calculation of the code number is performed making use of the code number calculation module which is comprised, in the software module and at least one input parameter which comprises the destination identifier (such as a vehicle control unit serial number, a user number or customer number, or any other suitable identification for identifying the destination at which running of the software is requested). The destination identifier will advantageously be stored in the vehicle control unit 1. In step 42, the calculated code number is compared with the stored code number which is stored in the software. If the calculated code number is equal to the stored code number then the software module is enabled in step 43. If the calculated code number is not equal to the stored code number then the software module is disabled, i.e. availability of the software module on the particular automotive vehicle control unit being inhibited. Thus, the software module is only started in case that a correct code number is calculated, i.e. the software module is only started at a predetermined destination, as only a destination comprising the predetermined destination identifier will result in a calculation of a code number which corresponds to the stored code number. Thus, use of the software or a copy thereof, at other destinations, i.e. at other vehicle control units, other users, etc. is prevented. Further, as the code number calculation module is comprised in the software, it is possible to incorporate different code number calculation modules in different software modules, thus in case that an unauthorised person should have successfully retrieved the algorithm behind a particular code number calculation tool comprised in a particular software module, then this person only has access to the particular software module which comprises the particular code number calculation tool, however not to all other software modules which comprise a different code number calculation tool. In the example described above, the software module has been made available to the user on a CD-ROM, however it is also possible that the software module is stored on a magnetically readable disk, a magnetically readable tape, a semiconductor memory. Further, it is possible that the software module is downloaded from the internet.

Consequently, the invention provides a user-friendly, fast and secure way for providing a software module to an automotive vehicle control unit as a request for obtaining access to the software module is sent to a server, upon which the server provides an access message advantageously comprising an access key, such as a decryption key, enabling access to the software module. The server can determine validity of the request and can provide for a charging of an amount to a user account for payment of the software. An advantage of the system and method according to the invention is that the software can be distributed in advance, while use of the software is controlled via the access message as described above and payment for the software takes place when access to the software is provided. Thus, it is not required to send large files via the internet or another network, as the software itself, which comprises the software module, is already present on the CD-ROM, while only comparatively small messages need to be sent via the internet for providing access to the software.

By making use of the method and system according to the invention, as described in particular with reference to Fig. 1 and Fig. 2, it is possible to provide the software to the vehicle quickly and easily. Thus, when a function comprised in a software module, is required, a request message is sent to the server, which results in an access message to be sent from the server to the programming device. With the access message access is provided to the software which can reside on a CD-ROM or any other suitable means. The CD-ROM or other means on which the software modules are stored can be distributed to a wide range of dealers, and/or other service outlets. It is possible with the method and system according to the invention to only charge the dealer or service outlets at the moment when a specific software module comprised on the CD-ROM is accessed, as charging can take place upon sending an access message by the server to the programming device. In this manner it is not required to send large amounts of data via a network, such as the internet or other communication means, such as a telecommunication network, as the software module itself is available advantageously on the CD-ROM, while only a small amount of data, i.e. the request message and the access message is transferred via the network. Further, traceability can be provided as with the destination identifier it is possible to keep record in the server of the destination for which an access message has been provided, i.e. it is possible to keep track of the destinations to which a particular software module will be transferred. The destination identifier in this example advantageously comprises the vehicle identification number (VIN), but of course any other identification number such as a micro controller identification number or engine management number or engine serial number can be applied. Advantageously, in a further aspect of the invention, the method according to the invention comprises the further step of sending a confirmation message from the programming device to the server, the confirmation message comprising a confirmation that the software module has been loaded into the programmable memory which is comprised in the vehicle. Thus, traceability can be optimised as it is possible to not only keep record of the request messages and access messages, but to also keep track of the confirmation messages confirming that the software is downloaded into the particular vehicle. The confirmation message advantageously comprises the destination identifier and an identification of the software module.

## Claims

1. A method for providing a software module to an automotive vehicle control unit, the method comprising the steps, by a programming device, of:
a) establishing a connection between a programmable memory of the vehicle control unit and the programming device;
b) generating a request message, the request message comprising.a software module identifier for identifying the software module and a destination identifier for identifying a destination for the software module;
c) sending the request message from the programming device via a communication means to a server;
d) receiving from the server an access message, enabling the programming device to access the software module, the access message comprising a code number determined by the server; and
e) loading the software module, by the programming device, into the programmable memory of the vehicle control unit;
wherein step d) comprises the steps of:
d1) receiving from the server the access message comprising an access key;
d2) deriving the access key from the access message;
d3) accessing the software module by the programming device using the access key;
d4) deriving the code number from the access message; and
d5) storing the code number in the software module, the software module further comprising a code number calculation module for calculating the code number, the code number calculation module being adapted for calculating the code number using at least one input parameter comprising the destination identifier, for enabling the software module to verify if the code number calculated by the code number calculation module equals the code number stored in the software module.

2. The method according to claim 1, **characterised by** the further step of
f) sending a confirmation message from the programming device to the server, after loading the software module in the programmable memory.

3. The method according to claim 1 or 2, **characterised in that** the access key comprises a decryption key, step d3) comprising the step of decrypting the software module with the decryption key.

4. The method according to any of the preceding claims, **characterised in that** the method comprises the further step of
g) charging, by the server, an amount to a user account for payment for the software module.

5. The method according to claim 4, **characterised in that** step g) comprises the further step of:
g1) checking, in a user account database, prior payments for a same user; and
g2) determining a value of the amount based on the prior payments.

6. The method according to any of the preceding claims, **characterised in that** the destination identifier is chosen from a group comprising a user identification, a vehicle identification, a programming device identification, a vehicle control unit identification and/or a vehicle control unit memory identification.

7. The method according to any of the preceding claims, **characterised by** the steps of, by the server, before step d):
providing a duplicate of the code number calculation tool to the server;
calculating the code number in the server; and
integrating the code number in the access message.

8. The method according to any of the preceding claims, **characterised in that** the software module comprises program instructions for, before enabling the software module in the automotive vehicle control unit, performing the steps of:
calculating the code number by the code number calculation module; comparing the code number calculated with the code number stored in the software module; and
enabling the software module only when the calculated code number equals the code number stored in the software module.

9. The method according to any of the preceding claims, **characterised in that** step d) comprises the further step of downloading the software module from the internet.

10. The method according to any of the preceding claims, **characterised in that** step d) comprises the further step of reading the software module from a memory means.

11. The method according to claim 10, **characterised in that** the memory means is chosen from a group comprising an optically readable disk, magnetically readable disk, a magnetically readable tape, and a semiconductor memory.

12. The method according to any of the preceding claims, **characterised in that** the programming device comprises a serial communication device for an on-board diagnosis and/or Engine Control Unit programming and/or reprogramming.

13. A method for enabling a software module in an automotive vehicle control unit, the software module having been provided to the instrument according to the method according to any of the preceding claims, the method comprising the steps of:
calculating, in the automotive vehicle control unit, the code number by the code number calculation module comprised in said software module;
comparing the calculated code number with the code number stored in the software module; and
enabling the software module only when the calculated code number equals the code number stored in the software module.

14. A method for providing access to a software module for use in an automotive vehicle control unit having a programmable memory, the method comprising the steps of, in a server:
receiving, from a programming device, a request message requesting access to the software module, the request message comprising a software identification for identifying the software module; and
sending an access message comprising an access key enabling the automotive instrument to access the software module and further comprising a code number, from the server to the programming device.

15. A computer program comprising program instructions which when run on a data-processing system all steps of the method according to any of claims 1 to 12.

16. A computer program comprising program instructions which when run on a data-processing system all steps of the method according to claim 13.

17. A computer program comprising program instructions which when run on a data-processing system all steps of the method according to claim 14.

## Patentansprüche

1. Verfahren zum Bereitstellen eines Softwaremoduls für eine Kraftfahrzeug-Steuereinheit, wobei das Verfahren die folgenden durch eine Programmiereinrichtung ausgeführten Schritte umfasst:
a) Aufbauen einer Verbindung zwischen einem programmierbaren Speicher der Fahrzeug-Steuereinheit und der Programmiereinrichtung;
b) Erzeugen einer Anforderungsnachricht, wobei die Anforderungsnachricht eine Softwaremodul-Kennung zum Identifizieren des Softwaremoduls und eine Zielkennung zum Identifizieren eines Ziels für das Softwaremodul umfasst;
c) Senden der Anforderungsnachricht von der Programmiereinrichtung über eine Kommunikationseinrichtung an einen Server;
d) Empfangen einer Zugriffsnachricht von dem Server, die die Programmiereinrichtung befähigt, auf das Softwaremodul zuzugreifen, wobei die Zugriffsnachricht eine durch den Server bestimmte Kennziffer enthält; und
e) Laden des Softwaremoduls durch die Programmiereinrichtung in den programmierbaren Speicher der Fahrzeug-Steuereinheit;
wobei Schritt d) die folgenden Schritte umfasst:
d1) Empfangen der einen Zugriffsschlüssel enthaltenden Zugriffsnachricht von dem Server;
d2) Ableiten des Zugriffsschlüssels aus der Zugriffsnachricht;
d3) Zugreifen auf das Softwaremodul durch die Programmiereinrichtung unter Verwendung des Zugriffsschlüssels;
d4) Ableiten der Kennziffer aus der Zugriffsnachricht; und
d5) Speichern der Kennziffer in dem Softwaremodul, wobei das Softwaremodul des Weiteren ein Kennziffern-Berechnungsmodul zum Berechnen der Kennziffer umfasst, wobei das Kennziffern-Berechnungsmodul zum Berechnen der Kennziffer unter Verwendung wenigstens eines die Zielkennung enthaltenden Eingabeparameters eingerichtet ist, um das Softwaremodul zu befähigen zu verifizieren, ob die durch das Kennziffern-Berechnungsmodul berechnete Kennziffer mit der in dem Softwaremodul gespeicherten Kennziffer gleich ist.

2. Verfahren nach Anspruch 1, **gekennzeichnet durch**
den weiteren Schritt des
f) Sendens einer Bestätigungsnachricht von der Programmiereinrichtung an den Server, nachdem das Softwaremodul in den programmierbaren Speicher geladen worden ist.

3. Verfahren nach Anspruch 1 oder 2, **dadurch gekennzeichnet, dass** der Zugriffsschlüssel einen Entschlüsselungs-Schlüssel enthält, wobei Schritt d3) den Schritt des Entschlüsselns des Softwaremoduls mit dem Entschlüsselungs-Schlüssel umfasst.

4. Verfahren nach einem der vorangehenden Ansprüche, **dadurch gekennzeichnet, dass** das Verfahren den folgenden weiteren Schritt umfasst:
g) Berechnen eines Betrags durch den Server an ein Benutzerkonto zur Zahlung für das Softwaremodul.

5. Verfahren nach Anspruch 4, **dadurch gekennzeichnet, dass**
Schritt g) die folgenden weiteren Schritte umfasst:
g1) Prüfen vorheriger Zahlungen für einen gleichen Benutzer in einer Benutzerkonten-Datenbank; und
g2) Bestimmen eines Wertes des Betrags auf Basis der vorherigen Zahlungen.

6. Verfahren nach einem der vorangehenden Ansprüche, **dadurch gekennzeichnet, dass** die Zielkennung aus einer Gruppe ausgewählt wird, die eine Benutzerkennung, eine Fahrzeugkennung, eine Kennung der Programmiereinrichtung, eine Kennung der Fahrzeug-Steuereinheit und / oder eine Kennung des Speichers der Fahrzeug-Steuereinheit umfasst.

7. Verfahren nach einem der vorangehenden Ansprüche, **gekennzeichnet durch** die folgenden vor Schritt d) **durch** den Server ausgeführten Schritte:
Bereitstellen einer Kopie des Hilfsprogramms zur Kennziffern-Berechnung für den Server;
Berechnen der Kennziffer auf dem Server; und
Einbinden der Kennziffer in die Zugriffsnachricht.

8. Verfahren nach einem der vorangehenden Ansprüche, **dadurch gekennzeichnet, dass** das Softwaremodul Programmbefehle umfasst, um vor dem Aktivieren des Softwaremoduls in der Kraftfahrzeug-Steuereinheit die folgenden Schritte auszuführen:
Berechnen der Kennziffer durch das Kennziffern-Berechnungsmodul;
Vergleichen der berechneten Kennziffer mit der in dem Softwaremodul gespeicherten Kennziffer; und
nur dann erfolgendes Aktivieren des Softwaremoduls, wenn die berechnete Kennziffer mit der in dem Softwaremodul gespeicherten Kennziffer gleich ist.

9. Verfahren nach einem der vorangehenden Ansprüche, **dadurch gekennzeichnet, dass** Schritt d) den weiteren Schritt des Herunterladens des Softwaremoduls aus dem Internet umfasst.

10. Verfahren nach einem der vorangehenden Ansprüche, **dadurch gekennzeichnet, dass** Schritt d) den weiteren Schritt des Auslesens des Softwaremoduls aus einer Speichereinrichtung umfasst.

11. Verfahren nach Anspruch 10, **dadurch gekennzeichnet, dass** die Speichereinrichtung aus einer Gruppe ausgewählt wird, die eine optisch lesbare Platte, eine magnetisch lesbare Platte, ein magnetisch lesbares Band und einen Halbleiterspeicher umfasst.

12. Verfahren nach einem der vorangehenden Ansprüche, **dadurch gekennzeichnet, dass** die Programmiereinrichtung eine serielle Kommunikationsvorrichtung für eine On-Board-Diagnose und / oder zum Programmieren und / oder Umprogrammieren der Motor-Steuereinheit umfasst.

13. Verfahren zum Aktivieren eines Softwaremoduls in einer Kraftfahrzeug-Steuereinheit, wobei das Softwaremodul für das Instrument nach dem Verfahren nach einem der vorangehenden Ansprüche bereitgestellt worden ist, wobei das Verfahren die folgenden Schritte umfasst:
Berechnen der Kennziffer durch ein in dem Softwaremodul enthaltenes Kennziffern-Berechnungsmodul in der Kraftfahrzeug-Steuereinheit;
Vergleichen der berechneten Kennziffer mit der in dem Softwaremodul gespeicherten Kennziffer; und
nur dann erfolgendes Aktivieren des Softwaremoduls, wenn die berechnete Kennziffer mit der in dem Softwaremodul gespeicherten Kennziffer gleich ist.

14. Verfahren zum Bereitstellen des Zugriffs auf ein Softwaremodul zum Einsatz in einer Kraftfahrzeug-Steuereinheit, die einen programmierbaren Speicher aufweist,
wobei das Verfahren die folgenden auf einem Server ausgeführten Schritte umfasst:
Empfangen einer Zugriff auf das Softwaremodul anfordernden Anforderungsnachricht von einer Programmiereinrichtung, wobei die Anforderungsnachricht eine Softwarekennung zum Identifizieren des Softwaremoduls enthält; und
Senden einer Zugriffsnachricht, die einen Zugriffsschlüssel enthält, der das Automobilinstrument befähigt, auf das Softwaremodul zuzugreifen, und die des Weiteren eine Kennziffer enthält, von dem Server an die Programmiereinrichtung.

15. Computerprogramm, das Programmbefehle enthält, die, wenn sie auf einem Datenverarbeitungssystem ausgeführt werden, alle Schritte des Verfahrens nach einem der Ansprüche 1 bis 12 durchführen.

16. Computerprogramm, das Programmbefehle enthält, die, wenn sie auf einem Datenverarbeitungssystem ausgeführt werden, alle Schritte des Verfahrens nach Anspruch 13 durchführen.

17. Computerprogramm, das Programmbefehle enthält, die, wenn sie auf einem Datenverarbeitungssystem ausgeführt werden, alle Schritte des Verfahrens nach Anspruch 14 durchführen.

## Revendications

1. Procédé consistant à fournir un module de logiciel à une unité de commande de véhicule automobile, le procédé comprenant les étapes, par un dispositif de programmation, consistant à :
a) établir une connexion entre une mémoire programmable de l'unité de commande de véhicule et le dispositif de programmation ;
b) générer un message de requête, le message de requête comprenant un identifiant de module de logiciel destiné à identifier le module de logiciel et un identifiant de destination destiné à identifier une destination pour le module de logiciel ;
c) envoyer le message de requête depuis le dispositif de programmation, via un moyen de communication, à un serveur ;
d) recevoir de la part du serveur un message d'accès, permettant au dispositif de programmation d'accéder au module de logiciel, le message d'accès comprenant un numéro de code déterminé par le serveur ; et
e) charger le module de logiciel, par le dispositif de programmation, dans la mémoire programmable de l'unité de commande de véhicule ;
dans lequel l'étape d) comprend les étapes consistant à :
d1) recevoir de la part du serveur le message d'accès comprenant une clé d'accès ;
d2) dériver la clé d'accès du message d'accès ;
d3) accéder au module de logiciel par le dispositif de programmation en utilisant la clé d' accès ;
d4) dériver le numéro de code du message d'accès ; et
d5) stocker le numéro de code dans le module de logiciel, le module de logiciel comprenant en outre un module de calcul de numéro de code destiné à calculer le numéro de code, le module de calcul de numéro de code étant adapté afin de calculer le numéro de code en utilisant au moins un paramètre d'entrée comprenant l'identifiant de destination, afin d'activer le module de logiciel de façon à vérifier si le numéro de code calculé par le module de calcul de numéro de code est égal au numéro de code stocké dans le module de logiciel.

2. Procédé selon la revendication 1, **caractérisé par** l'étape supplémentaire consistant à
f) envoyer un message de confirmation depuis le dispositif de programmation au serveur, après avoir chargé le module de logiciel dans la mémoire programmable.

3. Procédé selon la revendication 1 ou 2, **caractérisé en ce que** la clé d'accès comprend une clé de décryptage, l'étape d3) comprenant l'étape de décryptage du module de logiciel avec la clé de décryptage.

4. Procédé selon l'une quelconque des revendications précédentes, **caractérisé en ce que** le procédé comprend l'étape supplémentaire consistant à
g) charger, par le serveur, une somme sur un compte d'utilisateur en vue du paiement du module de logiciel.

5. Procédé selon la revendication 4, **caractérisé en ce que** l'étape g) comprend l'étape supplémentaire consistant à :
g1) vérifier, dans une base de données de comptes d'utilisateurs, les paiements antérieurs pour un même utilisateur ; et
g2) déterminer une valeur de la somme basée sur les paiements antérieurs.

6. Procédé selon l'une quelconque des revendications précédentes, **caractérisé en ce que** l'identifiant de destination est choisi parmi un groupe comprenant une identification d'utilisateur, une identification de véhicule, une identification de dispositif de programmation, une identification d'unité de commande de véhicule et/ou une identification de mémoire d'unité de commande de véhicule.

7. Procédé selon l'une quelconque des revendications précédentes, **caractérisé par** les étapes, par le serveur, avant l'étape d), consistant à :
prévoir un double de l'outil de calcul de numéro de code sur le serveur ;
calculer le numéro de code dans le serveur ; et
intégrer le numéro de code dans le message d'accès.

8. Procédé selon l'une quelconque des revendications précédentes, **caractérisé en ce que** le module de logiciel comprend des instructions de programme destinées à, avant d'activer le module de logiciel dans l'unité de commande de véhicule automobile, effectuer les étapes consistant à :
calculer le numéro de code par le module de calcul de numéro de code;
comparer le numéro de code calculé avec le numéro de code stocké dans le module de logiciel ; et
activer le module de logiciel uniquement lorsque le numéro de code calculé est égal au numéro de code stocké dans le module de logiciel.

9. Procédé selon l'une quelconque des revendications précédentes, **caractérisé en ce que** l'étape d) comprend l'étape supplémentaire consistant à télécharger le module de logiciel depuis Internet.

10. Procédé selon l'une quelconque des revendications précédentes, **caractérisé en ce que** l'étape d) comprend l'étape supplémentaire de lecture du module de logiciel depuis un moyen de mémoire.

11. Procédé selon la revendication 10, **caractérisé en ce que** le moyen de mémoire est choisi parmi un groupe comprenant un disque optiquement lisible, un disque magnétiquement lisible, une bande magnétiquement lisible, et une mémoire à semi-conducteurs.

12. Procédé selon l'une quelconque des revendications précédentes, **caractérisé en ce que** le dispositif de programmation comprend un dispositif de communication série pour un diagnostic intégré et/ou une programmation et/ou une reprogrammation de l'unité de commande du moteur.

13. Procédé d'activation d'un module de logiciel dans une unité de commande de véhicule automobile, le module de logiciel ayant été prévu sur l'instrument selon le procédé selon l'une quelconque des revendications précédentes, le procédé comprenant les étapes consistant à :
calculer, dans l'unité de commande de véhicule automobile, le numéro de code à l'aide du module de calcul de numéro de code compris dans ledit module de logiciel ;
comparer le numéro de code calculé avec le numéro de code stocké dans le module de logiciel ; et
activer le module de logiciel uniquement lorsque le numéro de code calculé est égal au numéro de code stocké dans le module de logiciel.

14. Procédé prévoyant un accès à un module de logiciel destiné à être utilisé dans une unité de commande de véhicule automobile ayant i,e mémoire programmable, le procédé comprenant les étapes consistant à, dans un serveur :
recevoir, de la part d'un dispositif de programmation, un message de requête demandant un accès au module de logiciel, le message de requête comprenant une identification de logiciel destinée à identifier le module de logiciel ; et
envoyer un message d'accès comprenant une clé d'accès activant l'instrument automobile afin d'accéder au module de logiciel et comprenant en outre un numéro de code, depuis le serveur, jusqu'au dispositif de programmation.

15. Programme informatique comprenant des instructions de programme qui, lorsqu'elles sont exécutées sur un système de traitement de données, exécutent l'ensemble des étapes du procédé selon l'une quelconque des revendications 1 à 12.

16. Programme informatique comprenant des instructions de programme qui, lorsqu'elles sont exécutées sur un système de traitement de données, exécutent l'ensemble des étapes du procédé selon la revendication 13.

17. Programme informatique comprenant des instructions de programme qui, lorsqu'elles sont exécutées sur un système de traitement de données, exécutent l'ensemble des étapes du procédé selon la revendication 14.
